# EUROPEAN PATENT APPLICATION

(11) **EP 4 838 063 A1**
(43) Date of publication of application: **11.11.2026**
(21) Application number: 26172135.1
(22) Date of filing: 14.04.2026
(51) Int. Cl.: F01D 25/30, B01D 53/86, F01N 3/20, F02C 3/30

(54) **EMISSIONS REDUCTION SYSTEM USING HOT SELECTIVE CATALYTIC REDUCTION OVERCOOLING**

(30) Priority: 09.05.2025 US 202519203742
(71) Applicant: GE Vernova Technology GmbH, 5400 Baden (CH)
(72) Inventor: KIPPEL, Bradly Aaron, Greenville, 29615 (US); KOPCHO, Scott Alan, Greenville, 29615 (US)
(74) Representative: Freigutpartners IP Law Firm

(57) **Abstract**

An emissions reduction (ER) system (102) for a gas turbine (GT) system (100), the GT system (100) and a related method are provided. The ER system (102) includes a selective catalytic reduction (SCR) unit (140) for removing NOₓ from an exhaust flow (132). The system (102) includes a cooling air supply (150) to direct a cooling air flow (152) into the exhaust flow (132) to cool the catalyst. A controller (160) is configured to: direct the cooling air flow (152) from the cooling air supply (150) at a first flow rate lower than a maximum flow rate of the cooling air supply (150) to cool the catalyst (140) to a predefined operating temperature, and direct the cooling air from the cooling air supply (150) at a second flow rate higher than the first flow rate to cool the catalyst (140) to an operating temperature lower than the predefined operating temperature in response to at least one operating parameter of the GT system (100) not meeting a respective threshold.

## Description

### TECHNICAL FIELD

The disclosure relates generally to gas turbine systems. More specifically, the disclosure relates to an emissions reduction system for a gas turbine (GT) system using overcooling of a hot selective catalytic reduction (SCR) unit. More in particular, the herein claimed invention relates to the subject matter set forth in the appended claims.

### BACKGROUND

Gas turbine systems include a compressor section operatively coupled to a turbine section through a combustion section. A compressed airflow from the compressor section is mixed with a fuel in the combustion section to form a combustible mixture. The combustion section includes a plurality of combustor elements (e.g., combustion cans), each including one or more burners. The combustible mixture is directed to the turbine section where it expands along a hot gas path through a number of turbine stages acting upon turbine airfoils mounted on wheels to create work that is output, for example, to power a generator. The hot gases pass from the turbine section through an exhaust section as exhaust gases. GT systems typically include an emissions reduction system to remove pollutants. For example, certain emissions reduction systems use a hot selective catalytic reduction (SCR) unit to remove nitrous oxide. Typically, the hot SCR units have the exhaust gas cooled to prevent damage to the SCR catalyst, but the hot SCR units are not controlled to ensure their long-term operability, make them efficient, or improve the efficiency of the GT system.

### BRIEF DESCRIPTION

The herein claimed invention relates to the subject matter set forth in the appended claims. Certain aspects, examples and features are outlined below. All aspects, examples and features mentioned below can be combined in any technically possible way.

An aspect of the disclosure includes an emissions reduction system for a gas turbine (GT) system, the emissions reduction system comprising: a selective catalytic reduction (SCR) unit for removing nitrous oxide from an exhaust flow through an exhaust housing; a cooling air supply configured to direct a cooling air flow from a cooling air supply into the exhaust flow to cool the SCR unit; a temperature sensor configured to measure a temperature of the SCR unit; and a controller operatively coupled to the temperature sensor and the cooling air supply, the controller configured to direct the cooling air flow from the cooling air supply at a first flow rate lower than a maximum flow rate of the cooling air supply to cool the SCR unit to a predefined operating temperature, and direct the cooling air from the cooling air supply at a second flow rate higher than the first flow rate to cool the SCR unit to an actual operating temperature lower than the predefined operating temperature in response to at least one operating parameter of the GT system not meeting a respective condition. The actual operating temperature may be referred to below in an abbreviated form as simply the "operating temperature", or as the "modified operating temperature". The above-mentioned respective condition may in certain contexts below be referred to as the "respective threshold".
It is understood that in particular the cooling air may be directed into the exhaust gas flow upstream of the selective catalytic reduction unit.

Another aspect of the disclosure includes any of the preceding aspects or of any of the appended claims, and the at least one operating parameter of the GT system not meeting a respective condition includes: a load of the GT system being below a predefined threshold load value, an atmospheric temperature being below a temperature threshold, and an air intake conditioning system for the GT system being off. The predefined threshold load value may be referred to below in an abbreviated form as simply the "predefined load value". The air intake conditioning system may be referred to below in an abbreviated form as simply the "air intake system".

Another aspect of the disclosure includes any of the preceding aspects and/or any of the appended claims, and the air intake system for the GT system includes at least one of an evaporative cooler, a wet compression system, a fogger, or a chiller.

Another aspect of the disclosure includes any of the preceding aspects and/or any of the appended claims, and further comprising a second catalyst configured to remove another pollutant than nitrous oxide from the exhaust flow, the second catalyst having a predefined diminished efficiency temperature floor below which the second catalyst operates at a diminished efficiency compared to a maximum efficiency thereof; wherein the controller directs the cooling air flow from the cooling air supply at a third flow rate higher than the first flow rate to cool the SCR unit to a modified, or actual, operating temperature lower than the predefined operating temperature but higher than the predefined diminished efficiency temperature floor of the second catalyst.

Another aspect of the disclosure includes any of the preceding aspects and/or any of the appended claims, and the second catalyst includes a carbon monoxide (CO) catalyst.

Another aspect of the disclosure includes any of the preceding aspects and/or any of the appended claims, and the diminished efficiency is at least 5% of the maximum efficiency of the second catalyst.

Another aspect of the disclosure includes any of the preceding aspects and/or any of the appended claims, and the predefined operating temperature is in a range of approximately 444 to 464 °C, and the operating temperature is in a range of approximately 383 to 403 °C.

Another aspect of the disclosure includes any of the preceding aspects and/or any of the appended claims, and the predefined operating temperature is approximately 454 °C, and the operating temperature is approximately 393 °C.

Another aspect of the disclosure includes a gas turbine (GT) system, comprising: a compressor section; a combustion section operatively coupled to the compressor section and including a plurality of combustor elements; a turbine section operatively coupled to the combustion section; an exhaust section downstream of the turbine section; an emissions reduction system disposed in the exhaust section, the emissions reduction system including: a selective catalytic reduction (SCR) unit for removing nitrous oxide from an exhaust flow through an exhaust housing; a cooling air supply configured to direct a cooling air flow into the exhaust flow to cool the SCR unit; a temperature sensor configured to measure a temperature of the SCR unit; and a controller operatively coupled to the temperature sensor and the cooling air supply, the controller configured to direct the cooling air flow from the cooling air supply at a first flow rate lower than a maximum flow rate of the cooling air supply to cool the SCR unit to a predefined operating temperature, and direct the cooling air from the cooling air supply at a second flow rate higher than the first flow rate to cool the SCR unit to an operating temperature lower than the predefined operating temperature in response to at least one operating parameter of the GT system not meeting a respective threshold.

Another aspect of the disclosure includes any of the preceding aspects and/or any of the appended claims, and the at least one operating parameter of the GT system not meeting a respective threshold includes: a load of the GT system being below a predefined load value, an atmospheric temperature being below a temperature threshold, and an air intake system for the GT system being off.

Another aspect of the disclosure includes any of the preceding aspects and/or any of the appended claims, and the air intake system for the GT system includes at least one of an evaporative cooler, a wet compression system, a fogger, or a chiller.

Another aspect of the disclosure includes any of the preceding aspects and/or any of the appended claims, and further comprising a second catalyst configured to remove another pollutant than nitrous oxide from the exhaust flow, the second catalyst having a predefined diminished efficiency temperature floor below which the second catalyst operates at a diminished efficiency compared to a maximum efficiency thereof; wherein the controller directs the cooling air flow from the cooling air supply at a third flow rate higher than the first flow rate to cool the SCR unit to a modified operating temperature lower than the predefined operating temperature but higher than the predefined diminished efficiency temperature floor of the second catalyst.

Another aspect of the disclosure includes any of the preceding aspects and/or any of the appended claims, and the second catalyst includes a carbon monoxide (CO) catalyst.

Another aspect of the disclosure includes any of the preceding aspects and/or any of the appended claims, and the diminished efficiency is at least 5% of the maximum efficiency of the second catalyst.

Another aspect of the disclosure includes any of the preceding aspects and/or any of the appended claims, and the predefined operating temperature is in a range of approximately 444 to 464 °C, and the operating temperature is in a range of approximately 383 to 403 °C.

Another aspect of the disclosure includes any of the preceding aspects and/or any of the appended claims, and the predefined operating temperature is approximately 454 °C, and the operating temperature is approximately 393 °C.

Another aspect of the disclosure includes a method for reducing emissions from a gas turbine (GT) system, the method comprising: directing an exhaust flow from a turbine section of the GT system through a selective catalytic reduction (SCR) unit to remove nitrous oxide from the exhaust flow; directing a cooling air flow into the exhaust flow to cool the SCR unit at a first flow rate lower than a maximum flow rate of a cooling air supply to cool the SCR unit to a predefined operating temperature; and directing the cooling air from the cooling air supply at a second flow rate higher than the first flow rate to cool the SCR unit to an operating temperature lower than the predefined operating temperature in response to at least one operating parameter of the GT system not meeting a respective threshold.

Another aspect of the disclosure includes any of the preceding aspects and/or any of the appended claims, and the at least one operating parameter of the GT system not meeting a respective threshold includes: a load of the GT system being below a predefined load value, an atmospheric temperature being below a temperature threshold, and an air intake system for the GT system being off.

Another aspect of the disclosure includes any of the preceding aspects and/or any of the appended claims, and further comprising directing the exhaust flow over a second catalyst configured to remove another pollutant than nitrous oxide from the exhaust flow, the second catalyst having a predefined diminished efficiency temperature floor below which the second catalyst operates at a diminished efficiency compared to a maximum efficiency thereof; and wherein the operating temperature lower than the predefined operating temperature is higher than the predefined diminished efficiency temperature floor of the second catalyst.

Another aspect of the disclosure includes any of the preceding aspects and/or any of the appended claims, and the second catalyst includes a carbon monoxide (CO) catalyst, and the diminished efficiency is at least 5% of the maximum efficiency of the second catalyst.

Two or more aspects described in this disclosure, including those described in this summary section, and/or any of the appended claims, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic block diagram of a gas turbine (GT) system including an emissions reduction (ER) system, according to embodiments of the disclosure;
FIG. 2 shows a graph of nitrous oxide (NOₓ) removal efficiency versus temperature of a selective catalytic reduction (SCR) unit of the ER system, according to embodiments of the disclosure;
FIG. 3 shows a flow diagram of a method of operation of an ER system and GT system, according to embodiments of the disclosure;
FIG. 4 shows a schematic block diagram of a GT system including an ER system having a second catalyst, according to other embodiments of the disclosure;
FIG. 5 shows a graph of carbon monoxide removal efficiency versus temperature of an illustrative second catalyst of the ER system, according to other embodiments of the disclosure; and
FIG. 6 shows a flow diagram of a method of operation of an ER system and GT system, according to other embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a gas turbine (GT) system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the GT system or, for example, the flow of air through the combustor or coolant through one of the GT system's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor section end of the turbomachine, and "aft" referring to the rearward or turbine end of the gas turbine system.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs, or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include an emissions reduction system for a gas turbine (GT) system, a GT system including the emissions reduction system, and a related method. The GT system includes, among other things, an exhaust section downstream of a turbine section. The emissions reduction system includes a selective catalytic reduction (SCR) unit for removing nitrous oxide from an exhaust flow through an exhaust housing of the exhaust section. The emissions reduction system also includes a cooling air supply configured to direct a cooling air flow into the exhaust flow to cool the SCR unit. A controller is configured to: direct the cooling air flow from the cooling air supply at a first flow rate lower than a maximum flow rate of the cooling air supply to cool the SCR unit to a predefined operating temperature, and direct the cooling air from the cooling air supply at a second flow rate higher than the first flow rate to cool the SCR unit to an operating temperature lower than the predefined operating temperature in response to at least one operating parameter of the GT system not meeting a respective threshold. The emissions reduction system reduces the risk of the SCR unit failing to meet the emissions requirements, e.g., regarding nitrous oxide, and extends the life of the SCR unit. In addition, the emissions reduction system also allows the GT system to better respond to transient conditions while staying in emissions compliance, such as "fast ramping" of the GT system to meet a power-generating demand. The emissions reduction system also reduces the need for the GT system to take protective action to prevent SCR unit overheating, e.g., by reducing output.

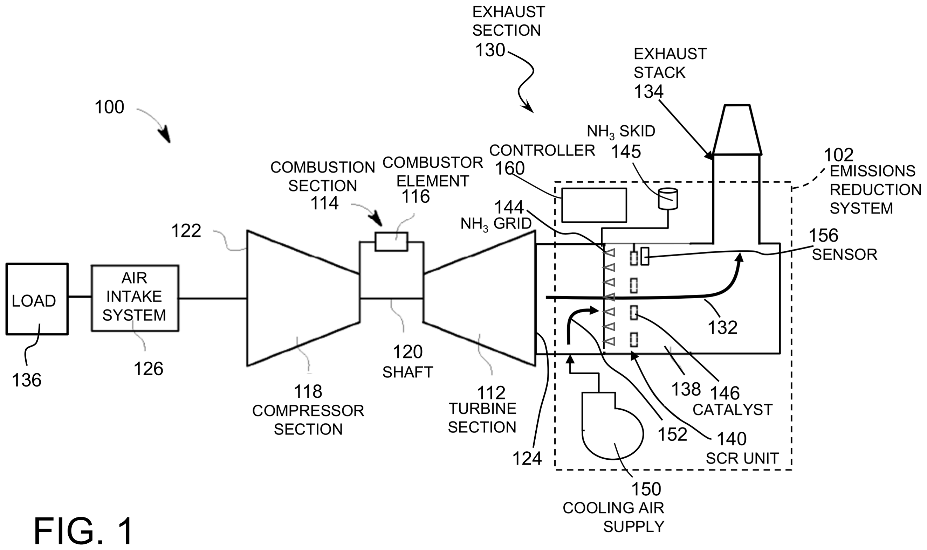

FIG. 1 shows a schematic block diagram of a gas turbine (GT) system 100 including an emissions reduction (ER) system 102 according to embodiments of the disclosure. GT system 100 includes a compressor section 118, a combustion section 114 operatively coupled to compressor section 118 and including a plurality of combustor elements 116 (one shown for clarity), and a turbine section 112 (e.g., an expansion turbine) operatively coupled to combustion section 114. Compressor section 118 is fluidly connected to turbine section 112 through combustion section 114. Combustion section 114 includes a plurality of combustor elements 116, which may be arranged in a can-annular combustor arrangement or in an annular combustor arrangement. Compressor section 118 may also be mechanically linked to turbine section 112 through a shaft 120.

Compressor section 118 includes an air inlet 122, and turbine section 112 includes an exhaust outlet 124. An air intake system 126 may be fluidically connected to air inlet 122. Air intake system 126 may condition air passing into compressor section 118. An exhaust section 130 is fluidically connected to exhaust outlet 124 downstream of turbine section 112. Exhaust section 130 may, among other things, condition an exhaust flow 132, i.e., exhaust gases, passing from turbine section 112 prior to introduction to ambient through, for example, an exhaust stack 134. GT system 100 may also include a driven load 136 that could take the form of, for example, a generator, a pump, or a vehicle.

As noted, air intake system 126 may condition air passing into compressor section 118. For example, air intake system 126 may remove, reduce or add moisture that may be carried by air passing into air inlet 122. In this regard, air intake system 126 may include any now known or later developed power augmentation system(s) that, among other things, increase overall power output, reduce emissions, improve compressor performance, and/or extend part life. Power augmentation system(s) may include but are not limited to an evaporative cooler, a wet compression system, a fogger, and/or a chiller (not shown). An evaporative cooler passes the air over water-soaked elements to cool the air. Similarly, a chiller cools incoming air before it enters the turbine by passing air of over a heat exchanger having a circulating, chilled liquid therein. A wet compression system injects atomized water into compressor inlet air to improve GT system 100 efficiency and reduce emissions. Similarly, a fogger sprays tiny water droplets into the inlet air to, for example, increase power and improve compressor performance. Other power augmentation systems may also be employed as part of air intake system 126.

As noted, exhaust section 130 may, among other things, condition exhaust flow 132, i.e., exhaust gases, passing from turbine section 112 prior to introduction to ambient through exhaust stack 134. Exhaust section 130 may include an exhaust housing 138 through which exhaust flow 132 is directed. Part of ER system 102 may be positioned in exhaust housing 138 and/or adjacent thereto. Exhaust flow 132 may include a wide variety of potential pollutants such as but not limited to carbon monoxide and nitrous oxide. ER system 102 may be part of exhaust section 130.

ER system 102 includes a selective catalytic reduction (SCR) unit 140 for removing nitrous oxide (NO_{X}) from exhaust flow 132 passing through exhaust housing 138. SCR unit 140 may include any now known or later developed ammonia injection grid (AIG) 144 and a catalyst 146 to reduce oxides of nitrogen, i.e., nitrous oxide (NO_{X}), from exhaust flow 132. AIG 144 may also include any now known or later developed ammonia flow control unit skid 145 outside of the SCR unit 140 to feed the ammonia into AIG 144.

SCR unit 140 is a 'hot' SCR system that operates at elevated temperatures, e.g., close to temperatures exhibited by exhaust flow 132. More particularly, SCR units 140 are designed to operate at a predefined operating temperature based on, among other factors, the catalyst material used. For example, an SCR unit 140 that uses a catalyst 146 of low vanadium oxide (V₂O₅) may be designed, e.g., by an SCR unit manufacturer, to operate at a predefined operating temperature in a range of approximately 444 to 464 °C. In one non-limiting example, the predefined operating temperature may be approximately 454 °C (~850 °F). "Approximately" or "about," as applied to a particular value of a range, applies to both end values and, unless otherwise dependent on the precision of the instrument measuring the value, may indicate +/- 5% of the stated value(s).

ER system 102 includes a cooling air supply 150 configured to direct a cooling air flow 152 into exhaust flow 132 to cool SCR unit 140, i.e., as the cooler exhaust flow 132 passes over SCR unit 140. Cooling air supply 150 may include any now known or later developed industrial fan system capable of injecting cooling air flow 152 into exhaust housing 138.

ER system 102 includes a temperature sensor 156 configured to measure a temperature of SCR unit 140. Temperature sensor 156 may include any now known or later developed temperature sensor such as but not limited to a thermocouple, resistance temperature detector, thermistor and/or semiconductor-based sensor. Temperature sensor 156 is capable of measuring a temperature at or near SCR unit 140 and capable of withstanding the environment within exhaust housing 138. Temperature sensor 156 may be a single sensor or an array of sensors. Temperature sensor 156 may be located upstream, downstream, or both upstream and downstream of SCR unit 140.

ER system 102 also includes a controller 160 operatively coupled to cooling air supply 150 and temperature sensor 156. Controller 160 is configured to make cooling air supply 150 direct cooling air flow 152 at a first flow rate to cool SCR unit 140 to the predefined operating temperature. The first flow rate is lower than a maximum flow rate of cooling air supply 150. That is, cooling air supply 150 has excess capacity when cooling SCR unit 140 to the predefined operation temperature. Controller 160 may include any now known or later developed industrial computerized control system (including hardware and/or software) capable of functioning as described herein. Controller 160 may be a standalone system in communication with parts of ER system 102 and/or it may be part of an overall GT system controller (not shown).

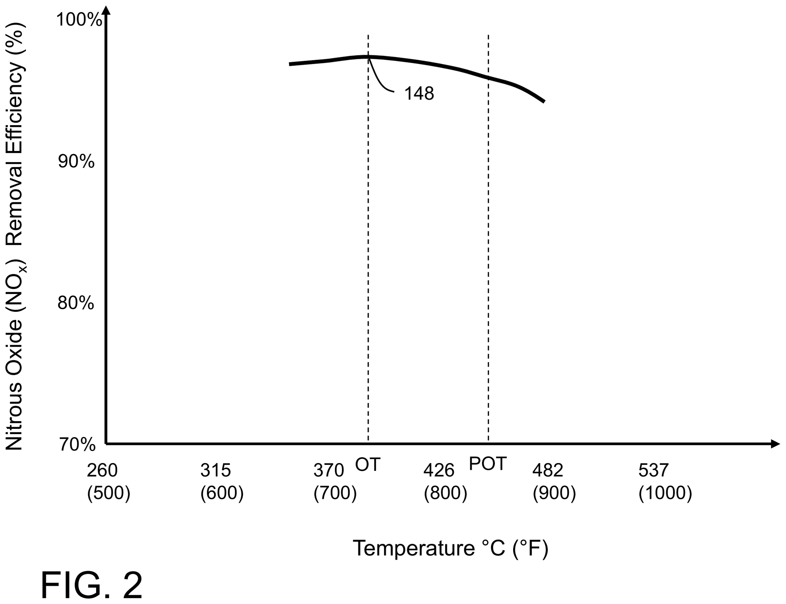

It has been discovered that the predefined operating temperature (POT) of SCR unit 140 is oftentimes not the most efficient operating temperature for SCR unit 140. For example, FIG. 2 shows a graph of nitrous oxide (NOₓ) removal efficiency versus temperature of an illustrative SCR unit 140 using low vanadium oxide (V₂O₅). In this example, SCR unit 140 has a predetermined (designed-for) operating temperature (POT) in a range of approximately 444 to 464 °C (~831-867 °F). In certain embodiments, the predefined operating temperature may be approximately 454 °C (~850 °F). As noted, controller 160 is configured to make cooling air supply 150 direct cooling air flow 152 at the first flow rate to cool SCR unit 140 to the POT. However, as shown in the graph, SCR unit 140 is more efficient at an operating temperature (OT) in a range of approximately 383 to 403 °C (~721 to757 °F). In certain embodiments, the operating temperature may be approximately 393 °C (~740 °F) - see point 148 in graph of FIG. 2. Other SCR units 140 using similar catalyst material exhibit similar removal efficiency versus temperature characteristics.

In order to profit from the potential unused efficiency, in accordance with embodiments of the disclosure, controller 160 is additionally configured to direct the cooling air from cooling air supply 150 at a second flow rate higher than the first flow rate to cool SCR unit 140 to an operating temperature lower than the POT in response to at least one operating parameter of GT system 100 not meeting a respective threshold. More particularly, where operating parameter(s) of GT system 100 allow, controller 160 increases a cooling air flow to SCR unit 140 to reduce its temperature to achieve the higher emissions removal levels. In one example, as shown in FIG. 2, SCR unit 140 may be cooled to an operating temperature (OT) of approximately 393 °C (~740 °F) to increase nitrous oxide removal by, for example, 2-3%. Controller 160 may access temperature sensor 156 to ascertain whether the operating temperature is reached.

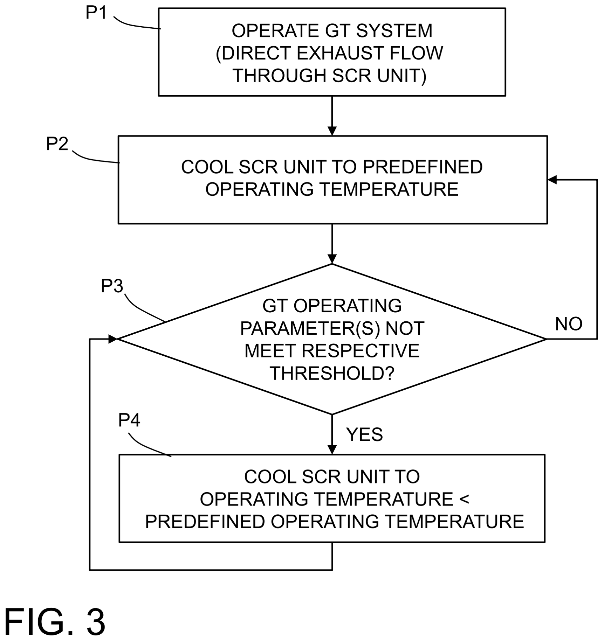

FIG. 3 shows a flow diagram of a method of operation of ER system 102 and GT system 100 according to embodiments of the disclosure. In process P1, GT system 100 is operated, and exhaust flow 132 from turbine section 112 of GT system 100 is directed through SCR unit 140 to remove nitrous oxide from exhaust flow 132. GT system 100 is operated as described previously herein, and exhaust flow 132 is directed through SCR unit 140 in a conventional manner. More particularly, exhaust flow 132 exits turbine section 112 and is directed by exhaust housing 138 through SCR unit 140.

In process P2, controller 160 with cooling air supply 150 directs cooling air flow 152 into exhaust flow 132 to SCR unit 140 at a first flow rate lower than a maximum flow rate of cooling air supply 150 to cool SCR unit 140 to the predefined operating temperature. The first flow rate is typically controlled by controller 160 to achieve the predefined operating temperature.

In process P3, controller 160 determines whether at least one operating parameter of GT system 100 is not meeting (i.e., is failing to meet) a respective threshold. The operating parameter(s) may include but are not limited to: a load of GT system 100, an atmospheric temperature (i.e., at or near air intake system 126 (FIG. 1)), and an air intake system 126 (FIG. 1) operational status. The threshold may vary depending on the type of operating parameter. For GT system 100 (FIG. 1) load, the threshold may be the load of GT system 100 (FIG. 1) being below a predefined load value. In certain embodiments, the predefined load value may be a maximum load. In other embodiments, the predefined load value can be some load below maximum load, e.g., 95%, 90%, 85%, 80%, 75%, etc. The temperature threshold can be any temperature at which excess cooling capacity of cooling air supply 150 is known to be available, which may vary depending on a wide variety of factors such as but not limited to GT system 100 (FIG. 1) and/or component size, location; cooling air supply 150 (FIG. 1) size and capacity; and exhaust housing 138 size, capacity and/or shape. In non-limiting examples, the temperature threshold can be 18 °C (~65 °F), 15 °C (~60 °F), 12 °C (~55 °F), 10 °C (~50 °F), 7 °C (~45 °F), etc. In terms of air intake system 126 (FIG. 1) status, the threshold may be all or part of it being turned off (i.e., non-operational). For example, at least one of an evaporative cooler, a wet compression system, a fogger, a chiller, or other component of air intake system 126 (FIG. 1) could be turned off. In any event, the operating parameter(s) not meeting the respective threshold indicates to controller 160 the ability to further cool SCR unit 140.

In process P4, in response to at least one operating parameter of GT system 100 not meeting a respective threshold, i.e.., Yes at process P3, controller 160 with cooling air supply 150 directs cooling air flow 152 at a second flow rate higher than the first flow rate to cool SCR unit 140 to an operating temperature lower than the predefined operating temperature. In one example, as shown in FIG. 2, SCR unit 140 may be cooled to an operating temperature (OT) of approximately 393 °C (~740 °F) to increase nitrous oxide removal by, for example, 2-3%. Controller 160 may access temperature sensor 156 to ascertain whether the operating temperature is reached. The second flow rate may be at or near the maximum flow rate of cooling air supply 150 but is higher than the first flow rate. In this manner, ER system 102 allows GT system 100 to better respond to transient conditions while staying in emissions compliance, such as "fast ramping" of GT system 100 (FIG. 1) to meet power generating demand. ER system 102 also reduces the need for GT system 100 (FIG. 1) to take protective action to prevent SCR unit 140 overheating, e.g., by reducing output.

As shown in FIG. 3, the additional cooling of SCR unit 140 may continue until at process P3, controller 160 determines the at least one operating parameter is meeting the respective threshold, i.e., No at process P3, which indicates excess cooling air flow 152 may not be available and additional cooling of SCR unit 140 must stop. In this case, controller 160 returns to process P2 where, with cooling air supply 150, it directs cooling air flow 152 into exhaust flow 132 to SCR unit 140 at the first flow rate lower than the maximum flow rate of cooling air supply 150 to cool SCR unit 140 to the higher, predefined operating temperature.

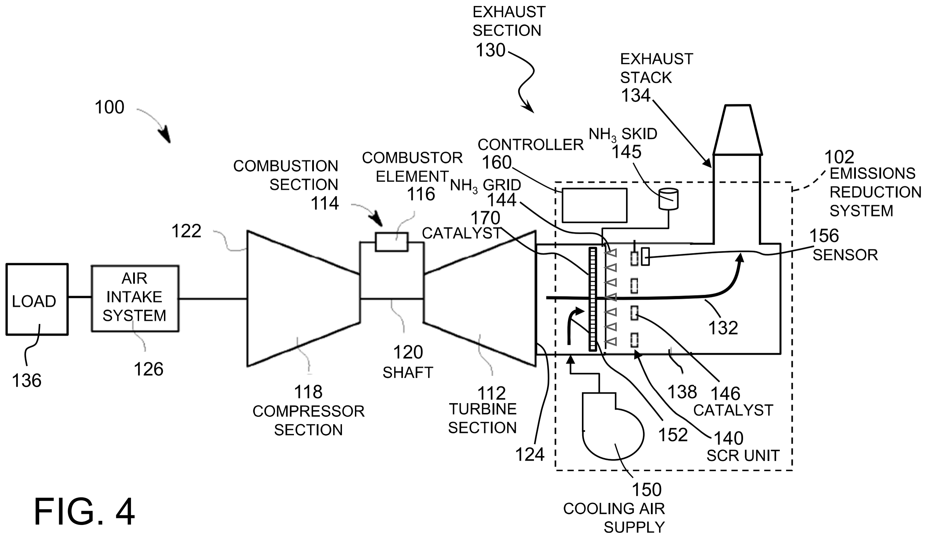

FIG. 4 shows a schematic block diagram of GT system 100 including ER system 102 according to other embodiments of the disclosure. GT system 100 in FIG. 4 is identical to that in FIG. 1 except GT system 100 further includes a second catalyst 170 configured to remove another pollutant than nitrous oxide (NOₓ) from exhaust flow 132. In certain embodiments, second catalyst 170 may include a carbon monoxide (CO) catalyst. However, second catalyst 170 can be any now known or later developed pollutant-removing catalyst that operates at elevated temperatures, e.g., such as temperatures exhibited by exhaust flow 132. While second catalyst 170 is shown upstream of SCR unit 140, it can alternatively be located downstream of SCR unit 140.

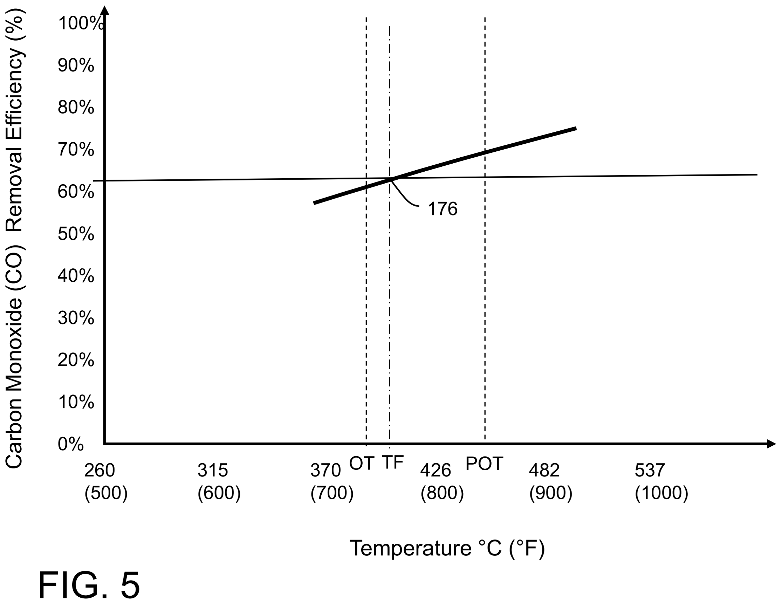

In certain cases, use of second catalyst 170 may present challenges to providing additional cooling to SCR unit 140, as described herein, because doing so lowers the temperature of exhaust flow 132 to a point that second catalyst 170 loses its efficiency. FIG. 5 shows a graph of carbon monoxide (CO) removal efficiency versus temperature of an illustrative second catalyst 170. In this example, second catalyst 170 has a predefined diminished efficiency temperature floor (TF) below which second catalyst 170 operates at a diminished efficiency compared to a maximum efficiency thereof. (In the example shown, the diminished efficiency is around 62% from a maximum efficiency of around 70%). For second catalyst 170, 62% efficiency may make the catalyst inoperative for its intended purpose or at least out of compliance with emissions control requirements. In certain embodiments, the diminished efficiency may be at least 5% of the maximum efficiency of second catalyst 170. However, other diminished efficiencies may be used and may vary depending on the second catalyst 170 used.

In the non-limiting example shown, second catalyst 170 may have predefined diminished efficiency temperature floor (TF) at approximately 398 °C (~750 °F) - see point 176 in graph of FIG. 5. Other second catalysts 170 may have different values. As noted previously, controller 160 may provide cooling air at the second, higher flow rate to cool SCR unit 140 to approximately 393 °C (~740 °F) - see point 148 in graph of FIG. 2. Accordingly, cooling SCR unit 140 to that operating temperature may cause second catalyst 170 to be at least out of compliance.

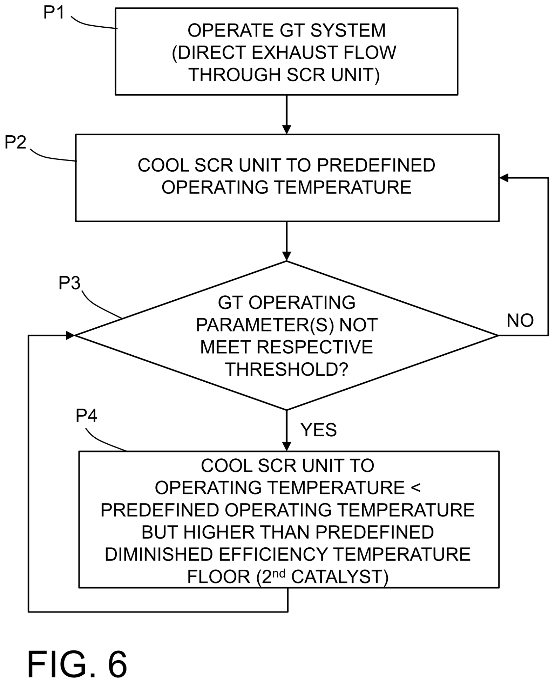

FIG. 6 shows a flow diagram of a method of operation of ER system 102 and GT system 100 according to other embodiments of the disclosure. FIG. 6 is identical to FIG. 3, except in process P4, controller 160 directs cooling air flow 152 from cooling air supply 150 at a third flow rate higher than the first flow rate to cool SCR unit 140 (and second catalyst 170) to a modified operating temperature lower than predefined operating temperature therefor but higher than the predefined diminished efficiency temperature floor (TF in FIG. 5) of second catalyst 170. The modified operating temperature, therefore, is higher than the operating temperature (OT) in ER systems 102 having only SCR unit 140 and without second catalyst 170, and the third flow rate is less than the second flow rate. With reference to FIG. 5, the modified operating temperature falls between the predefined diminished efficiency temperature floor (TF) and predefined operating temperature (POT). In this manner, the increased efficiency for SCR unit 140 is achieved without diminishing the efficiency of second catalyst 170 beyond its predefined diminished efficiency temperature floor.

Embodiments of the disclosure provide various technical and commercial advantages, examples of which are discussed herein. The emissions reduction system reduces the risk of the SCR unit failing to meet the emissions requirements, e.g., regarding nitrous oxide, and extends the life of the SCR unit. In addition, the emissions reduction system also allows the GT system to better respond to transient conditions while staying in emissions compliance, such as "fast ramping" of the GT system to meet power generating demand. The emissions reduction system also reduces the need for the GT system to take protective action to prevent SCR unit overheating, e.g., by reducing output.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. As noted, "approximately" or "about," as applied to a particular value of a range, applies to both end values and, unless otherwise dependent on the precision of the instrument measuring the value, may indicate +/- 5% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations not explicitly shown in the exemplary embodiments will be apparent to those of ordinary skill in the art without departing from the scope of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A method for reducing emissions from a gas turbine system (100), the method comprising:
directing an exhaust flow (132) from a turbine section (112) of the gas turbine system through a selective catalytic reduction unit (140) configured to remove nitrous oxide from the exhaust flow;
directing a cooling air flow (152) from a cooling air supply (150) into the exhaust flow at a first flow rate lower than a maximum flow rate of the cooling air supply to cool the selective catalytic reduction unit (140) to a predefined operating temperature; and
directing the cooling air flow (152) from the cooling air supply (150) at a second flow rate higher than the first flow rate to cool the selective catalytic reduction unit (140) to an actual operating temperature lower than the predefined operating temperature in response to at least one operating parameter of the gas turbine system not meeting a respective condition.

2. The method of claim 1, wherein the cooling air flow (152) is directed into the exhaust gas flow (132) upstream of the selective catalytic reduction unit (140).

3. The method of any preceding claim, wherein the at least one operating parameter of the gas turbine system not meeting a respective condition includes: a load of the gas turbine system being below a predefined threshold load value, an atmospheric temperature being below a temperature threshold, and/or an air intake conditioning system for the gas turbine system being off.

4. The method of the preceding claim, wherein the air intake conditioning system for the gas turbine system being off includes at least one of: an evaporative cooler, a wet compression system, a fogger, and/or a chiller.

5. The method of any preceding claim, further comprising directing the exhaust flow (132) over a second catalyst (170) configured to remove another pollutant than nitrous oxide from the exhaust flow, the second catalyst having a predefined diminished efficiency temperature floor below which the second catalyst operates at a diminished efficiency compared to a maximum efficiency thereof; and wherein the actual operating temperature lower than the predefined operating temperature is higher than the predefined diminished efficiency temperature floor of the second catalyst.

6. The method of the preceding claim, comprising directing the cooling air flow (152) from the cooling air supply (150) at a third flow rate higher than the first flow rate to cool the selective catalytic reduction unit (140) to an actual operating temperature lower than the predefined operating temperature but higher than the predefined diminished efficiency temperature floor of the second catalyst.

7. The method of any of claims 5 or 6, wherein the cooling air (152) is directed into the exhaust gas flow (132) upstream of the second catalyst (170).

8. The method of any of claims 5 through 7, wherein the second catalyst includes a carbon monoxide catalyst.

9. The method of any of claims 5 through 8, wherein the diminished efficiency is at least 5% of the maximum efficiency of the second catalyst.

10. The method of any preceding claim, wherein the predefined operating temperature is in a range of approximately 444 to 464 °C, and the actual operating temperature is in a range of approximately 383 to 403 °C.

11. The method of the preceding claim, wherein the predefined operating temperature is approximately 454 °C, and the actual operating temperature is approximately 393 °C.

12. An emissions reduction system (102) for a gas turbine system (100), the emissions reduction system comprising:
a selective catalytic reduction unit (140) for removing nitrous oxide from an exhaust flow (132) through an exhaust housing (138);
a cooling air supply (150) configured to direct a cooling air flow (152) into the exhaust flow (132) to cool the selective catalytic reduction unit (140);
a temperature sensor (156) configured to measure a temperature of the selective catalytic reduction unit (140); and
a controller (160) operatively coupled to the temperature sensor (156) and the cooling air supply (150), the controller configured to perform a method according to any preceding claim.:

13. A gas turbine system (100), comprising:
a compressor section (118);
a combustion section (114) operatively coupled to the compressor section;
a turbine section (112) operatively coupled to the combustion section;
an exhaust section (13= downstream of the turbine section; and
an emissions reduction system (102) of the preceding claim disposed in the exhaust section.
